# EUROPEAN PATENT APPLICATION

(11) **EP 3 912 850 A1**
(43) Date of publication of application: **24.11.2021**
(21) Application number: 21175021.1
(22) Date of filing: 20.05.2021
(51) Int. Cl.: B60L 53/60, B60L 53/66, B60L 53/68, B60W 60/00, G08G 1/00

(54) **PUBLIC TRANSPORT SYSTEM COMPRISING BUSES WITH POWER SUPPLY BATTERIES AND MANAGEMENT METHOD**

(30) Priority: 21.05.2020 IT 202000011893
(71) Applicant: E.P.T. - Eco Power Technology Phoenix S.r.l., 25016 Ghedi (BS) (IT)
(72) Inventor: FUSARI, Pierpaolo, I-25128 Brescia (BS) (IT); COLOMBO, Giorgio, I-24030 Pontida (BG) (IT)
(74) Representative: Lampis, Marco

(57) **Abstract**

A public transport system (10) comprises electric buses (12) and at least one path (11) along which the buses travel and which has intermediate stops (13) and at least one terminus (14). The buses (12) are equipped with a receiving system (2) for the inductive charging of the batteries, and the stops (13) and the at least one terminus (14) are equipped in turn with transmission systems (15, 16) for inductive charging, which link up with the receiving systems (20) of the buses when the buses stop at the stops and in said at least one terminus. The transport system (10) further comprises a computerized ground control system (18) equipped with a wireless connection system (26) for connection with an on-board control system (17) of the buses for the exchange of information. The ground control system (18) comprises an electronic system (27) for processing virtual models (30) for the simulation of the buses of the plurality, to which information transmitted by the on-board control system (17) is supplied in order to simulate the future behaviour of each bus (12). This allows corresponding information to be sent to the on-board control system (17) of the buses and to the charging systems so as to optimize the duration of the batteries (21) and/or the charging time.

## Description

The present invention relates to a transport system comprising a fleet of buses with at least partially electric traction by means of power supply batteries and at least one travel path for the buses in the fleet. The invention also comprises a method for managing such a system.

Bus systems for urban or semi-urban road-based public transport of the electric or hybrid type (namely using electric motors powered by batteries in turn charged by internal-combustion motor-generator units) are being proposed as valid alternatives to conventional solutions which use only an internal-combustion engine, in particular because of problems associated with environmental pollution.

In an urban or semi-urban environment the buses generally operate continuously during the day travelling along a circular route, namely a route which is periodically repeated by the bus and which has a certain number (usually a fairly large) number of intermediate stops, where the bus stops for a short or very short time, and at least one terminus station, where the bus stops for a relatively longer period of time, while waiting for the next scheduled trip along the route.

Unfortunately, for uses of this type, where the bus must be able to operate continuously for a reasonably long period of time during the day, the battery-powered electric supply system requires large-capacity batteries, which are therefore costly, in particular in relation to the cost of the remaining parts of the vehicle. Moreover, large-capacity batteries have a large volume and high weight which, on the one hand, reduces the load capacity of the vehicle, namely the number of passengers which can be transported, and on the other hand increases further the electric power consumption owing to the weight of the batteries to be transported, with a negative impact on the autonomy of the vehicle.

Moreover, continuous stopping and starting of the vehicle, due to both the numerous intermediate stops along the travel route and the density of normal urban traffic, results in non-optimum electric power consumption which may be worsened even further by the particular features of the route, such hills, flyovers, etc.

All this may result in the need for more powerful batteries, resulting in a further increase in the cost and weight of the batteries and a further increase in the associated problems.

It must also be considered that the stresses associated with a circular route for public transport in an urban or semi-urban environment may be relatively damaging for a hybrid or battery-powered electric bus which must be able to withstand a high variability of the transported load. Possible breakdowns could therefore become relatively frequent. However, precisely during such use for urban transport, the service must always be guaranteed for the users and any problems affecting a vehicle in service should be communicated as quickly as possible to the users. Buses of the hybrid type may reduce to a certain degree the need for large-size batteries, but at the same time the weight of the vehicle is increased owing to the internal-combustion motor-generator unit and the need to equip the bus with a suitable fuel tank, thus increasing the complexity of the system and the risk of possible faults or breakdowns.

The object of the present invention is to provide a public transport system and a management method which are able to overcome the aforementioned drawbacks and optimize the use of battery-powered buses.

In view of this object, the idea which has occurred is to provide, according to the invention, a public transport system, comprising a plurality of buses equipped with electric batteries for powering electric traction motors and at least one path along which the buses of the plurality travel and which has intermediate stops and at least one terminus, characterized in that the buses are equipped with a receiving system for the inductive charging of the batteries and an on-board control system, the stops and the at least one terminus being in turn equipped with transmission systems for inductive charging, which link up with the receiving systems of the buses when the buses stop at the stops and in said at least one terminus opposite a transmission system for inductive charging, the transport system further comprising a computerized ground control system equipped with a wireless connection system for a wireless connection with the on-board control system of the buses for the exchange of information, the ground control system further comprising an electronic system for processing virtual models for the simulation of buses of the plurality, to which information transmitted by the on-board control system is supplied via the wireless connection in order to simulate the further behaviour of each bus and send corresponding information to the on-board control system of the buses so as to optimize the duration of the batteries until the next transmission system for inductive charging present at the stops and/or at the terminus is reached and/or optimize the charging stoppage time at the stops and/or at the terminus.

The idea which has also occurred is to provide according to the invention a method for the computerized management of a public transport system, comprising at least one path along which a plurality of buses travel and which has intermediate stops and at least one terminus, the buses being equipped with electric batteries for powering electric traction motors and a receiving system for inductive charging of these batteries, the stops and the at least one terminus being in turn equipped with transmission systems for inductive charging, which link up with the receiving systems of the buses when the buses stop at the stops and in the said at least one terminus opposite a transmission system for inductive charging, the method also providing for a computerized ground control system which is connected via wireless transmission to an on-board control system of the buses for the exchange of information, the computerized ground control system comprising in turn virtual models for simulating the buses of the plurality, to which information transmitted by the on-board control system is supplied in order to simulate the future operation of each bus and send information to the on-board control system of the buses in order to optimize the duration of the batteries until the next transmission system for inductive charging present at the stops and/or at the terminus is reached and/or optimize the charging stoppage time at the stops and/or at the terminus.

In order to illustrate more clearly the innovative principles of the present invention and its advantages compared to the prior art, an example of embodiment applying these principles will be described below with the aid of the attached drawings. In the drawings:
- Figure 1 shows a schematic view of a transport system provided according to the invention;
- Figure 2 shows schematically in greater detail a bus according to the invention;
- Figure 3 shows schematically in greater detail a ground control part of the system according to the invention.

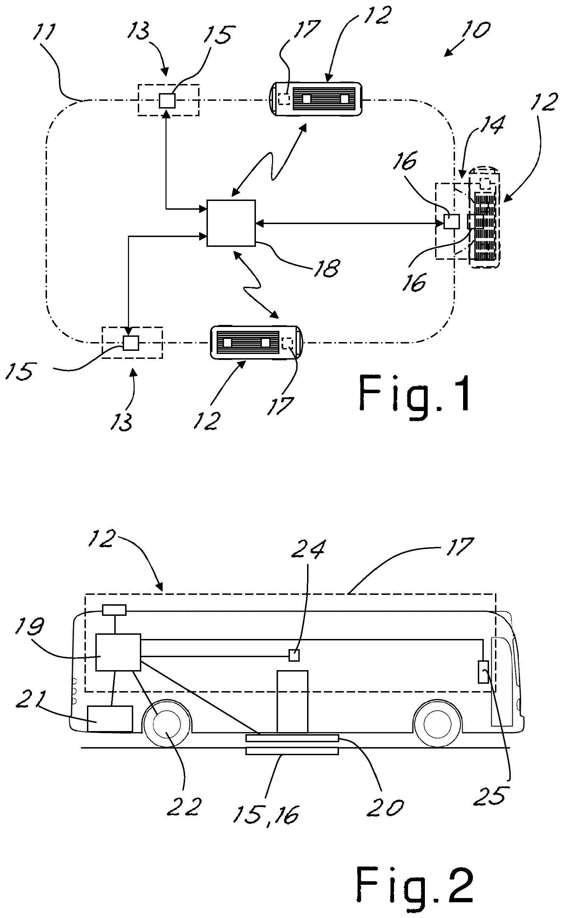

With reference to the figures, Figure 1 shows in schematic form a public transport system according to the invention, indicated overall by 10, comprising at least one path 11 along which one or more buses 12 periodically travel. The path comprises a certain number of intermediate stops 13 and at least one stop or terminus station 14. As shown in Figure 2, the buses 12 are of the totally electric or hybrid type, with electric traction motors 22 and suitable electric power supply batteries 21. As will become clear below, each bus is provided with a receiving system for charging the batteries of the inductive type, namely with a dedicated receiving coil 20 intended to be coupled with a dedicated transmitting coil of a ground charging transmission system. Preferably, the receiving coil 20 on the bus may be arranged underneath the deck of the bus so to be inductively coupled with a corresponding coil arranged on the ground surface when the bus is positioned above this transmitting coil.

The inductive coupling between the coils transfers the electric energy between the transmitting coil and the receiving coil and this energy is used in the bus in order to charge at least partially the batteries on-board.

As can be seen again in Figure 1, a charging transmission system 15 is present at the location of at least some - if not all - the intermediate stops 13. Moreover, one or more charging systems 16 are also present in the terminus station. Preferably, a sufficient number of charging systems are present in the terminus station for simultaneously charging the buses which must stop there while waiting to resume service along their assigned route. Reserve buses 12 may also be present in the terminus station, ready to be used as a replacement for buses which must be taken out of service, for example because of a fault or breakdown or a predicted possible future fault or breakdown, as will be clarified below.

Each bus 12 comprises an electronic on-board system 17 which communicates via a wireless connection with a ground control station 18 which manages the transport system as a whole. The system 17 may be realized, for example using a per se known suitably programmed microprocessor or PLC electronic apparatus, as may be easily imagined by the person skilled in the art on the basis of the description provided here.

The ground control station 18 is connected also to the charging transmission systems 15 and 16 (for example also comprising per se known suitably programmed microprocessor or PLC control systems). Communication may occur also via radio or via suitable known data lines.

The system 18 may be advantageously realized using a per se known computerized electronic apparatus, which has been suitably programmed, as may be easily imagined by the person skilled in the art on the basis of the description provided here.

Figure 2 shows in greater detail the structure of the control system 17 present on-board the buses 12.

The system 17 has a central command unit 19 which is connected to the inductive charging receiving system 20, to the electric batteries 21 and to the electric traction motors 22. Advantageously, the electric motors may be more than one, each connected to a respective wheel. In the case where an internal-combustion motor-generator unit (not shown) is present, the central command unit 19 may be also connected thereto, in order to control the operation and electric power supply from it to the batteries.

The system 17 also comprises an information reception/transmission system 23 for providing the position of the vehicle along the route and for exchanging information between the on-board central unit 19 and the ground station 18. The system 23 may also comprise or realize a geolocation system. Moreover, the system 17 may comprise further sensors 24 for detecting information about the operating conditions of the bus.

In particular, the sensors 24 may also comprise devices for detecting the number of passengers present on the vehicle, so as to estimate in real time the load transported, to be added to the mass (known beforehand) of the empty vehicle. These sensors may for example be known boarding/disembarking detectors located at the doors of the vehicle so as to detect the passing movement of the passengers. The connections of the on-board electronic system 17 with the various parts of the vehicle and with the on-board sensors may, for example, enable various parameters relating to operation, consumption and use of the bus to be detected and processed and sent to the ground station 18.

In particular, the on-board system 17 may be able to acquire various information relating to the vehicle via the appropriate sensors, known per se, and communication with the traction system and/or other apparatus existing on the bus. For example, the on-board system may be able to determine the charged state of the battery in percentage terms, the remaining autonomy (preferably in terms of distance which can be travelled), the instantaneous speed, the working time, the distances travelled, the energy consumed, etc. Further detectable parameters may be, for example, the acceleration of the bus along the travel path, the distance from the vehicle preceding it along the route, the external and internal temperature, etc.

The sensors may also be able to detect the presence of the underground charging system and if necessary allow the on-board system to communicate with the charging system in order to request charging of the batteries, if necessary with particular charging parameters.

In the case of a hybrid vehicle, the system 17 may also control the internal-combustion motor-generation system, so as to active it when necessary and supervise operation thereof.

The system 17 may comprise a man/machine interface device 25 available for the driver of the vehicle. This interface device 25 may comprise advantageously a known alphanumeric display and optionally an input keyboard.

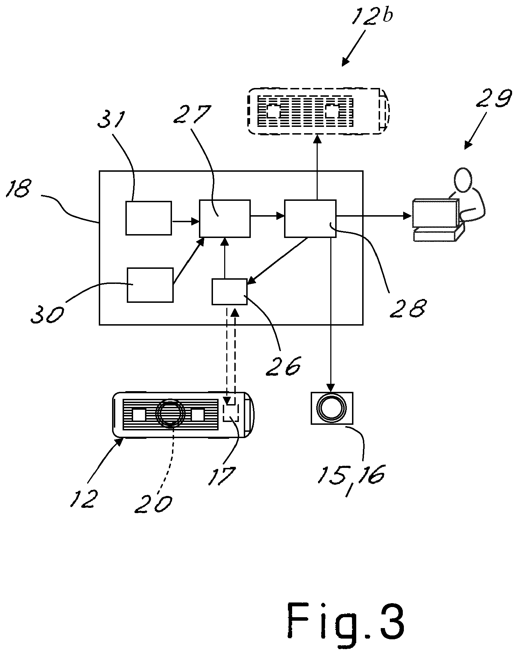

Figure 3 shows in greater detail the structure of the ground control station 18. This station comprises a wireless communication system 26 for the exchange of information with the reception/transmission system 23 of the on-board control system 17 present on the buses.

The ground control station also comprises an electronic system 27 for model processing, as will be clarified below, and an electronic command system 28 which is connected to the electronic system 27 for model processing, which may exchange information with the buses via the communication system 26 and which may control the charging transmission systems 15 and/or 16. The ground control station 18 may also comprise or be connected to one or more terminals 29 for exchanging information and commands with human operators.

The system may also comprise one or more suitable depots for storage and maintenance of the buses. In the figures and in the description, for the sake of simplicity, said depots coincide with the terminus, but they may also be arranged in independent positions along the travel path or in suitable locations situated off the travel path. The depots in any case will also comprise charging systems connected preferably to the ground control system 18.

The ground control system 18 may also be advantageously housed at one of these depots. The ground control system may also form or comprise a data supervision and archive centre. The operator station 29 may also be advantageously be included in the supervision centre.

According to the invention, the electronic model processing system 27 uses a digital model of the buses (indicated by 30 in Figure 3) which develops the models based on the information which it receives from the on-board processing units 17 and based on the sensors of the bus.

Basically, in addition to the information about the state of the vehicle which can be directly obtained by the sensors (for example, the instantaneous charged state of the batteries), the future conditions of the vehicle will be calculated by the ground system 18 on the basis of the virtual model of the vehicle. In fact, based on the real data, it is possible for the ground system 18 to develop the virtual model rapidly in order to obtain predictions about the state of the vehicle in the future and on the basis thereof take decisions and/or use data which are sent for example to the operator at the terminal 29 and/or to the electronic command system 28 which may send commands to the bus itself, to the charging systems and if necessary arrange for the use of replacement vehicles (indicated generally by 12b in Figure 3).

Basically, the virtual copy of the real machine which is processed by the electronic system 27 allows the system to simulate the future behaviour of the real machine, synchronized with that of the real vehicle depending on the measurements recorded by the sensors, and will be able to simulate operation thereof in the short term in order to establish the optimum operating parameters, and in the medium-to-long term for more extensive predictive purposes.

Advantageously, the ground control system 18 also comprises a database 31 connected to the electronic system 27 and containing the characteristics of the travel path 11 for calculating the predictive behaviour of the model (and therefore of the real vehicle) along this path. For example, the database may contain the altimetric variations of the path so that, knowing the real position of the vehicle, by applying these variations to the model it is possible to predict the future power consumption of the batteries, for example along the section which the vehicle has yet to travel along to reach the next stop. This allows the ground control system 18, for example, to alert the driver of the vehicle that he/she needs to change his/her driving style in order to save more energy in the batteries, and/or to set the charging system 15 present at the next stop and if necessary indicate the optimum stoppage time to the driver in order to reach the yet next stop 13.

For use of virtual models, the system 18 may be advantageously provided with an application, known per se, for performing modelling by means of artificial intelligence (Al). The AI system will thus be provided with a machine learning capacity and, after a suitable period of time, will be able to auto-correct its own parameters, approximating in an increasingly more appropriate manner the operation of the real vehicle (and of any simulated subsystems thereof, such as the possible hybrid system, the braking system, etc.). The use of artificial intelligence is particularly advantageous for a rapid evaluation of the optimum parameters and simulation of operation, rather than the use of conventional analytical models which for a system of this complexity could be slow and not readily applicable for real-time evaluations. Advantageously, the method according to the invention envisages detecting operating parameters of the buses and sending them via the wireless connection to the computerized ground control system 18 in order to incorporate these operating parameters in the models and provide predictions about future operation of the buses associated with these operating parameters.

With the management system based on simulated models of each vehicle in the transport system 10 it will thus be possible for example to evaluate the optimum conditions of use of the available energy of the vehicles, suggesting to the drivers better driving conditions in order to keep to the journey times along the route and indicating, if necessary, the appropriate measures for re-establishing the correct operating conditions for the bus when deviations from these conditions occur. The control system therefore suggest to the driver the driving conditions useful for keeping to the journey times and at the same time making the best possible use of the available energy and the stoppage time at the stops for partial rapid charging of the batteries until the next stop is reached.

Moreover, the control system 18 may autonomously manage a number of the vehicle parameters in order to improve the on-board comfort: for example, the air-conditioning of the driver's compartment may be managed in an optimum manner in order to minimize the energy consumption, taking into account the real surrounding (external/internal) conditions and the number of persons present in the vehicle and the characteristics of the travel path (for example the number of door openings and their opening frequency).

A further advantage of the system according to the invention is that of being able to use the data detected and the modelling, applied to the future of the vehicle, for the purpose of planning and optimizing the maintenance strategies for the vehicle.

In particular, by simulating operation of the various components of the vehicle and developing models with the real data detected by the sensors, it is possible to implement predictive maintenance strategies.

Owing to the virtual models of each vehicle, the control system 18 may in fact determine the probable residual operating time of a component before failure and for example command the withdrawal of a bus from service before a possible failure and/or signal the need for preventive maintenance of any component before its actual failure.

The possibility of monitoring the whole fleet of vehicles also allows further considerations to be made regarding the optimization and tracing of consumable materials or also the design or modification of critical components in the vehicles used.

At this point, it is clear how the objects of the invention have been achieved by providing a system 10 which allows optimum management of the available energy owing to the set of sensors for measuring the main operating parameters of each vehicle and the use of these parameters by the ground management system 18 in order to make predictions about the vehicle itself by means of digital models of the vehicle, and control operation thereof and consequently operation of the charging systems in an optimum manner. This allows for example smaller batteries to be used while ensuring in any case that the buses are able to travel along the whole route. Moreover, since the parameters of all the buses in service and their position along the route are known, the management system is able to harmonize operation of the entire transport system, taking suitable corrective measures for example also in the case of absence of single vehicles which have had to be withdrawn from service. Obviously, the above description of an embodiment applying the innovative principles of the present invention is provided by way of example of these innovative principles and must therefore not be regarded as limiting the scope of the rights claimed herein. For example, in addition to the inductive charging, the buses may also be equipped with an electric socket for cable charging, which may be used in particular when the bus is stopped at the depot and not in service. Charging in this case may be performed using known charging systems, also by means of a simple mains electricity line, for example a single-phase 230 Vac AC 16A line.

Communication between the ground stations and buses may be performed using any known wireless transmission system, for example mobile network data transmission systems. The system for localization of the buses along the route may include satellite (for example GPS) systems or wireless transmission systems or systems for detecting the presence of buses at stops and predicting the travel time between the stops, as may be now easily imagined by the person skilled in the art.

The electronic on-board system may also supervise other known on-board operations, such as controlling the position of the ignition key, controlling the power supply of devices not isolated by the ignition key, controlling the opening/closing of the doors, activation of the emergency lights, fast or slow activation of the various battery charging systems, etc.

Obviously the intermediate stops, the termini and the depots may be equipped with suitable known structures providing protection for the stopped vehicles, the personnel and the users and also known video surveillance systems.

In the case where high charging currents are necessary, the underground transmission coils of the charging systems may also be provided with cooling systems which are known per se, for example of the liquid type.

## Claims

1. Public transport system (10), comprising a plurality of buses (12) equipped with electric batteries (21) for powering electric traction motors (22), and at least one path (11) along which the buses of the plurality travel and which has intermediate stops (13) and at least one terminus (14), **characterized in that** the buses (12) are equipped with a receiving system (20) for the inductive charging of the batteries and an on-board control system (17), the stops (13) and the at least one terminus (14) being in turn equipped with transmission systems (15, 16) for inductive charging, which link up with the receiving systems (20) of buses when buses stop at the stops and in said at least one terminus opposite a transmission system (15, 16) for inductive charging, the transport system (10) further comprising a computerized ground control system (18) equipped with a wireless connection system (26) for a wireless connection with the on-board control system (17) of the buses for the exchange of information, the ground control system (18) further comprising an electronic system (27) for processing virtual models (30) for the simulation of buses of the plurality, to which information transmitted by the on-board control system (17) is supplied via the wireless connection in order to simulate the future behaviour of each bus (12) and send corresponding information to the on-board control system (17) of the buses and/or to the charging systems so as to optimize the duration of the batteries (21) and/or the charging stoppage time at the stops and/or at the terminus.

2. Public transport system (10) according to Claim 1, **characterized in that** the on-board control system is connected to a plurality of sensors (24) for detecting bus operating information.

3. Public transport system (10) according to Claim 2, **characterized in that** sensors of the plurality are able to detect the number of people on board so as to estimate the weight of the load transported by the bus.

4. Public transport system (10) according to Claim 1, **characterized in that** the ground control system (18) comprises a database (31) connected to the electronic system (27) and containing characteristics of the path (11) suitable for the calculation by the electronic system (27) of the prediction of the behaviour of the virtual model along this path.

5. Public transport system (10) according to Claim 1, **characterized in that** the ground control system (18) comprises an electronic control system (28) which is connected to the electronic system (27) for the model processing and which is able to exchange information with the buses via the communication system (26) and control the charging transmission systems (15 and/or 16).

6. Public transport system (10) according to Claim 5, **characterized in that** it comprises on the bus a man/machine interface device adapted to receive from the computerized ground control system (18) operating information and command information produced by the electronic control system (28).

7. Method for the computerized management of a public transport system, comprising at least one path (11) along which a plurality of buses (12) travel and which has intermediate stops (13) and at least one terminus (14), the buses being equipped with electric batteries (21) for powering electric traction motors (22) and a receiving system (20) for inductive charging of these batteries, the stops (13) and the at least one terminus (14) being in turn equipped with transmission systems (15, 16) for inductive charging, which link up with the receiving systems (20) of the buses when the buses stop at the stops and in the said at least one terminus opposite a transmission system (15, 16) for inductive charging, the method also providing for a computerized ground control system (18) which is connected via wireless transmission to an on-board control system (17) of the buses for the exchange of information, the computerized ground control system (18) comprising in turn virtual models (30) for simulating the buses of the plurality, to which information transmitted by the on-board control system (17) is supplied in order to simulate the future operation of each bus (12) and send information to the on-board control system (17) of the buses and to the charging systems so as to optimize the duration of the batteries (21) and/or the charging stoppage time at the stops and/or at the terminus.

8. Method according to Claim 7, **characterized by** detecting bus operating parameters and sending them via a wireless connection to the computerized ground control system (18) so as to insert these operating parameters in the models and make predictions about future operation of the buses associated with these operating parameters.

9. Method according to Claim 7, **characterized by** sending operating and command information to a man/machine interface device on the bus depending on the predictions of future operation of the buses, so as to signal to a driver the need to vary the driving behaviour.

10. Method according to Claim 7, **characterized by** sending operating and command information to the on-board control system (17) depending on the predictions of future operation of the buses, so as to modify the operating parameters of the bus.

11. Method according to Claim 7, **characterized in that** a database (31) connected to the electronic system (27) and containing characteristics of the path (11) is used in the ground control system (18) to calculate a prediction of the behaviour of the virtual model along that path.

12. Method according to Claim 7, **characterized by** using virtual models to predict the possibility of breakdown of the buses and command their withdrawal from service and/or the need for maintenance.
